# EUROPEAN PATENT SPECIFICATION

(11) **EP 0 572 153 B1**
(45) Date of publication and mention of the grant of the patent: **15.07.1998**
(21) Application number: 93303837.4
(22) Date of filing: 18.05.1993
(51) Int. Cl.: G11B 23/00

(54) **Method for mounting magnetic plate on a disc substrate**
Verfahren zur Befestigung einer Magnetplatte auf ein Plattensubstrat
Méthode de montage d'une plaque magnétique sur un substrat de disque

(30) Priority: 26.05.1992 JP 157306/92; 09.07.1992 JP 204323/92
(43) Date of publication of application: 01.12.1993
(73) Proprietor: SONY CORPORATION, Tokyo 141 (JP)
(72) Inventor: Kobayashi, Daiki, c/o Patents Division, Tokyo 141 (JP); Takano, Hiromichi, c/o Patents Division, Tokyo 141 (JP)
(74) Representative: Purvis, William Michael Cameron

(56) References cited:
- DE-A- 3 702 189
- US-A- 4 687 536
- US-A- 4 787 009
- US-A- 4 944 982
- US-A- 4 981 538

## Description

The invention relates to a method for mounting a magnetic plate on a disc substrate. It has particularly, though not exclusive application to mounting a magnetic plate on a substrate of an optical disc or a magneto-optical disc.

There has hitherto been proposed a disc for recording information signals, such as an optical disc or a magneto-optical disc. Since this type of disc allows for high-density recording of information signals, there has been proposed a disc of an extremely small size, such as an optical disc or a magneto- optical disc, which is approximately 64 mm in diameter and which allows for recording of music signals continuing for about 74 minutes.

The magneto-optical disc, which is of a small diameter and yet permits high density recording of information signals, is loaded on a disc rotating driving unit so as to be rotated at a constant linear velocity by the disc rotating driving unit. As the disc is run in rotation, a light beam is radiated from an optical pickup device onto fine recording tracks formed on a signal recording layer on a major surface of the disc. Simultaneously, an external magnetic field, modulated in accordance with recording information signals, is applied to the disc from an external magnetic field generating unit, such as a magnetic head, for recording desired information signals on the disc.

For correctly radiating the light beam to the fine recording track during high-speed rotation of the disc, it is necessary for the magneto-optical disc of the disc rotating and driving unit to be loaded in position with the centre of rotation of the disc coincident with the centre of the disc table. To this end, a disc loading system has been proposed in which a magnetic metal plate is provided on the side of a magneto-optical disc so as to be attracted by a magnet provided on the side disc table for chucking the magneto-optical disc with respect to the disc table, as proposed for example in US-A-4 926 410, US-A-4 829 510 and US-A-4 787 009.

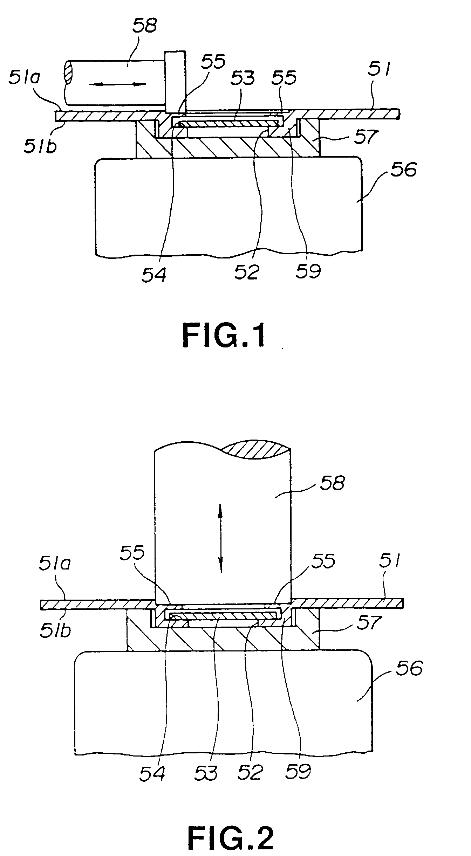

As shown in Fig.1 of the accompanying drawings, a magneto-optical disc, utilising a magnetic chucking system employing magnetic attraction by a magnet, is provided with a disc substrate 51 moulded of a synthetic resin, such as a transparent polycarbonate resin, in the form of a disc. On one major surface 51a of the disc substrate 51, there is formed a recording layer on which desired information signals are to be recorded. The major surface 51b of the disc substrate 51, opposite to its major surface 5la having the recording layer, is designed as a write/read surface for information signals. Recording/playback of desired information signals is performed by radiating a light beam to the signal recording layer from the write/read surface. A light beam is radiated to the recording layer from the write/read surface for recording and/or reproducing desired information signals.

The mid part of the disc substrate 51 has a centreing aperture 52 engaged by a centreing member provided on the disc rotating driving unit. A magnetic metal plate 53 in the form of a disc is provided at the centre of the major surface 51a of the disc substrate 51 to close the centreing aperture 52. The magnetic plate 53 is disposed so as to be accommodated within a housing recess 54 provided encircling the centreing aperture 52 on the major surface 51a of the disc substrate 51. A number of protrusions 55 directed to the inner side of the housing recess 54 are formed by ultrasonic machining of a rim of the recess 54. The magnetic plate 53, placed within the recess 54, is maintained by these protrusions 55 with respect to the disc substrate 51.

The magnetic plate 53 is mounted on the disc substrate 53 in the following manner.

The disc substrate 51 is first set in position on a disc support base 56, as shown in Fig.1.

The disc support base 56 has a disc rest 57 for accommodating a protuberance 59 delimiting the outer periphery of the recess 54 of the disc substrate 51 for positioning the disc substrate 51. The disc substrate 51 is positioned by having the protrusion 59 accommodated within the disc rest 57.

A horn 58 is placed in abutment with a rim part of the recess 54 of the disc substrate 51 set on the disc rest 57. To this horn 58 are transmitted ultrasonic vibrations from an ultrasonic oscillator, not shown. The ultrasonic vibrations are those propagated in a direction parallel to the major surface 51a of the disc substrate 51, that is, horizontally directed ultrasonic vibrations.

The result is that the portion of the synthetic material in the region of the recess 54 in contact with the horn 58 is melted due to the heat of friction so that the melted synthetic material is caused to flow inwardly of the rim to form the protrusions 55. This causes the magnetic plate 53 to be loosely accommodated and held in the recess 54. It is noted that the protrusions 55 are formed at e.g. four positions around the recess 54 to prevent the magnetic plate 53 from being disengaged from the disc substrate 51.

However, with the horizontal ultrasonic vibrations, since the propagation along the thickness of the disc substrate 51 is limited, two protrusions 55 at most may be formed by each ultrasonic forming operation, despite the merit that the thickness of the protrusions 55 is designed to prevent the magnetic plate from becoming detached may be controlled to a higher accuracy, the result is lower productivity due to increased contact time and insufficient strength of the protrusions 55.

In this consideration, attempts have been made to apply a columnar-shaped horn 58 vertically with respect to the major surface 51a of the disc substrate 51 and to apply vertically directed vibrations to the horn 58, as shown in Fig.2.

With the method of applying vertically directed ultrasonic vibrations, an annular protrusion 55 may be formed on the entire rim of the recess 54 by applying the horn 58 in contact with the disc substrate 51 for applying the longitudinal ultrasonic vibrations thereto for improving productivity from the viewpoint of the tact time.

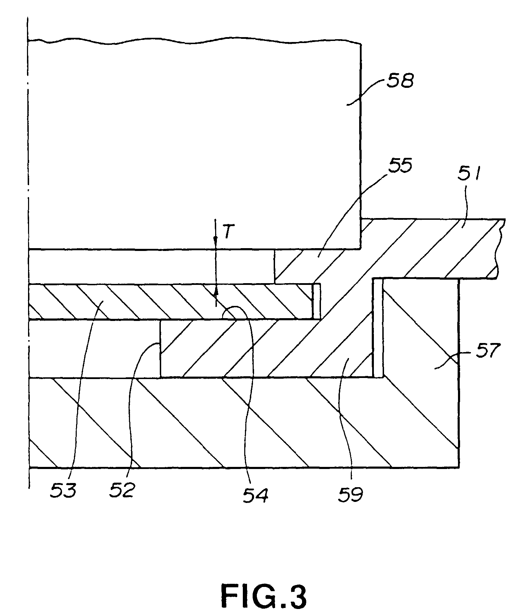

However, since the vibration are applied perpendicularly to the disc substrate 51, it is extremely difficult to control the thickness T of the protrusion 55 shown in Fig.3. The result is that the magnetic plate 53 tends to be stationary with respect to the disc substrate 51, in other words, it is difficult to provide a clearance between the magnetic plate 53 and the protrusion 55. If the magnetic plate 53 is stationary with respect to the disc substrate 51, the disc substrate 51 tends to be deformed due to the difference in thermal expansion coefficient between the magnetic metal plate 58 and the disc substrate of synthetic material 51. The result is that birefringence is produced in the disc substrate 51 to deteriorate optical properties to cause data write/read troubles.

According to one aspect of the invention, there is provided a method for mounting a magnetic plate on a disc substrate of a synthetic material comprising placing the magnetic plate within a housing recess of the disc substrate, abutting ultrasonic wave generating means comprising a horn on a rim of the housing recess of the disc substrate, and ultrasonically forming a protrusion directed towards a radially inner space of the housing recess to mount the magnetic plate on the disc substrate by the protrusion;
characterised in that the ultrasonic wave generating means generates torsional vibrations, that is to say an oscillation generated by rotating the horn in a plane by alternately switching between a clockwise rotation and a counter-clockwise rotation about an axis of the horn as a centre of rotation, the frequency of the ultrasonic vibrations generated by the ultrasonic wave generating means being 15 to 50 kHz.

According to another aspect of the invention, there is provided a device for mounting a magnetic plate to a disc substrate formed of a synthetic material comprising
setting means having a recess engaged with a protuberance of the disc substrate,
holding means for holding the disc substrate set on the setting means, the disc substrate being set on the setting means with the magnetic plate being placed within a recess of the disc substrate formed on the opposite side to the protuberance, the holding means having an opening, and
ultrasonic wave generating means having a horn introduced via said opening and abutted on a rim of the recess with a predetermined pressure applied thereto;
wherein the ultrasonic wave generating means comprises an ultrasonic oscillator reciprocatingly to rotate the horn back and forth around a centreline of the recess of the disc substrate as a centre of reciprocating rotation, the frequency of the ultrasonic vibrations generated by the ultrasonic wave generating means being 15 to 50 kHz.

Since the torsional vibrations are generated by the ultrasonic wave generating device for forming the protrusion from the rim of the housing recess of the disc substrate, the protrusion may be formed with the disc substrate to precisely controlled thickness. Besides, a constant clearance may be provided between the protrusion of the disc substrate and the magnetic plate.

The invention is diagrammatically illustrated by way of example in the accompanying drawings, in which:
Fig.1 is a cross-sectional view showing mounting of a magnetic plate on a disc substrate by applying horizontally directed vibrations thereto;
Fig.2 is a cross-sectional view showing mounting of a magnetic plate on a disc substrate by applying vertically directed vibrations thereto;
Fig.3 is an enlarged cross-sectional view showing parts of the magneto-optical disc to which vertically directed vibrations are being applied;
Fig.4 is an exploded perspective view showing a magneto- optical disc to which a first embodiment of the invention is applied;
Fig.5 is an exploded cross-sectional side view showing a magneto-optical disc to which the first embodiment of the invention is applied;
Fig.6 is a front view showing a device for mounting the magnetic plate according to the first embodiment of the invention;
Fig.7 is a cross-sectional side view showing the magnetic plate introduced in position on the disc substrate;
Fig.8. is a cross-sectional side view showing a horn caused to bear against the disc substrate;
Fig.9 is a cross-sectional side view showing a horn caused to bear against the disc substrate to impress ultrasonic vibrations to form a protrusion;
Fig.10 is an enlarged cross-sectional side view showing the state of forming the protrusion shown in Fig.9;
Fig.11 is a cross-sectional side view showing the magnetic plate mounted in position on the disc substrate;
Fig.12 is an exploded perspective view of a magneto-optical disc to which a second embodiment of the invention is applied;
Fig.13 is a cross-sectional side view showing a disc substrate and a magnetic plate making up the magneto-optical disc shown in Fig.12;
Fig.14 is a schematic cross-sectional side view showing a disc supporting table employed in a method according to the second embodiment of the invention;
Fig.15 is a schematic cross-sectional side view showing the disc substrate loaded on the disc supporting table;
Fig.16 is a cross-sectional side view showing the magnetic plate accommodated in a housing recess of the disc substrate to which the mounting method of the second embodiment of the invention is applied;
Fig.17 is a cross-sectional side view showing a vibration of impressing device an ultrasonic vibration unit in contact with the rim of the housing recess of the disc substrate;
Fig.18 is a partial perspective view showing a vibration impressing device employed in the mounting method according to the second embodiment of the invention;
Fig.19 is a side view, shown partially in cross-section, showing the vibration impressing device of Fig.18 in contact with the rim part of the housing recess in the disc substrate for forming the protrusion by application of ultrasonic vibrations;
Fig.20 is a cross-sectional side view showing the magnetic plate mounted in position on the disc substrate; and
Fig.21 is a plan view showing a magneto-optical disc having the magnetic plate mounted thereon in accordance with the second embodiment of the invention.

Referring to the drawings, a mounting method according to a first embodiment of the invention is explained in detail.

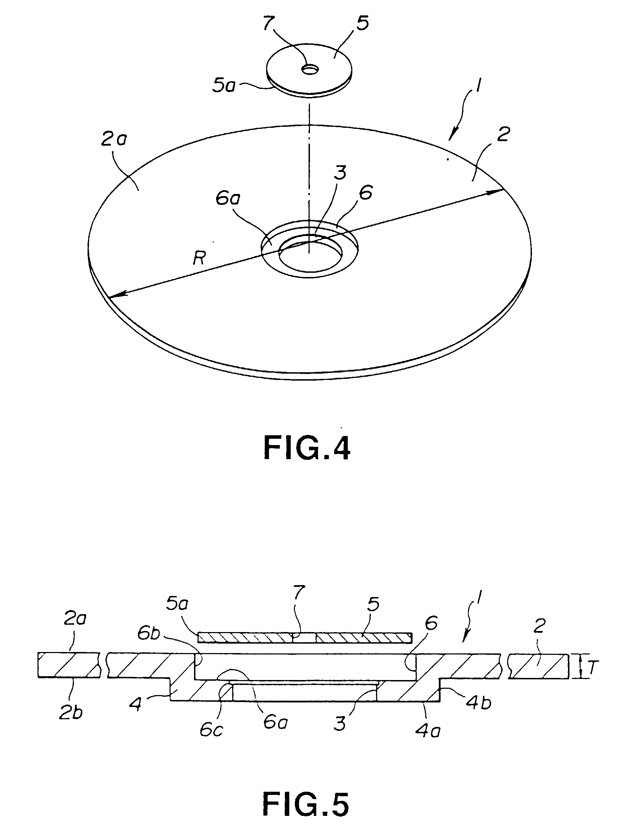

A magneto-optical disc 1, to which the method according to the first embodiment of the invention is applied, has a disc substrate 2 moulded of a transparent synthetic material, such as polycarbonate, as shown in Fig.4. The disc substrate 2 is in the form of a disc having a diameter R of approximately 64 mm and a thickness T of approximately 1.2 mm.

The magneto-optical disc 1, comprising the disc substrate 2, has a recording layer of a perpendicular magnetic recording material for recording information signals which is deposited as a signal recording part on one of the major surfaces 2a of the disc substrate 2. The other major surface 2b of the disc substrate 2, opposite to the major surface 2a, carrying the recording layer, is designed as a write/read surface for information signals. A light beam is radiated on the recording layer from the write/read surface of the magneto-optical disc 1 for recording or reproducing information signals.

The disc substrate 2 of the magneto-optical disc 1 has a centreing aperture 3 adapted for being engaged by a centreing member formed centrally of the disc table of a disc rotating and driving unit provided within a recording/reproducing apparatus, as shown in Figs.4 and 5. The centreing aperture 3 is formed as a through-hole in the disc substrate 2 having its centre in alignment with the centre of curvature of a recording track(s) formed spirally or concentrically on the recording layer.

The central region of the other major surface 2b of the disc substrate 2 has an integral annular protuberance 4 surrounding the centreing aperture 3, as shown in Fig.5. The protuberance 4 provides for a deeper depth of the centreing aperture 3 formed in the thin disc substrate 2 for increasing the amount of protuberance of a centreing member, provided on the disc table adapted for loading the magneto-optical disc 1 thereon, with respect to the centre aperture 3. Besides, the protuberance 4 functions to ensure a centreing operation by loading the magneto- optical disc so that the centre of rotation of the magneto- optical disc 1 is coincident with the axis of the disc table. In addition, the end face of the protuberance 4 functions as a reference plane for loading of the disc on the disc table.

Meanwhile, the protuberance 4 is formed in a non-recording radially inner region of the disc substrate 2, devoid of the signal recording layer, and has an amount of protuberance approximately equal to the thickness T of the disc substrate 2. Consequently, the portion of the disc substrate 2 formed with the protuberance 4 has a thickness twice that of the main body section of the disc substrate 2.

The central region of the major surface 2a of the disc substrate 2 has an annular housing recess 6 surrounding the centre aperture 3 and designed for accommodating a magnetic plate 5 as a magnetic attracting member therein. The recess 6 has a diameter smaller than the outer diameter r of the protuberance 4 and a depth approximately equal to the thickness T of the disc substrate 2. The opening edge of the recess 6 is flared as compared to its inner region to assure facilitated insertion of the magnetic plate 5 into the housing recess 6.

Thus the major surface 2a of the disc substrate 2 is a smooth surface except the region of the housing recess 6.

Besides, the inner rim of the bottom surface of the recess 6 functioning as a setting surface 6a for the magnetic plate 5 is formed with a step 6c. The purpose of the step 6c is to prevent burrs or like projections from being formed on the setting surface 6a for the magnetic plate 5 during moulding of the housing recess 6 to ensure smoothness of the setting surface 6a.

On the other hand, the magnetic plate 5, housed within the recess 6, is produced by punching a sheet of a metallic material, such as stainless steel (SUS-430), having a thickness on the order of 0.4 mm, into the shape of a disc. The magnetic plate 5 is formed as a disc of a size to be housed within the recess 6. Besides, the magnetic plate 5 is sized to be accommodated within the recess 6 without the outer rim 5a coming into contact with an inner wall 6b of the recess 6. The centre region of the magnetic plate 5 has a small-sized circular aperture 7 for ease of handling during the manufacture process.

The above-described magnetic plate 5 is mounted on the disc substrate 2 by a mounting device equipped with an ultrasonic wave generating unit as later described.

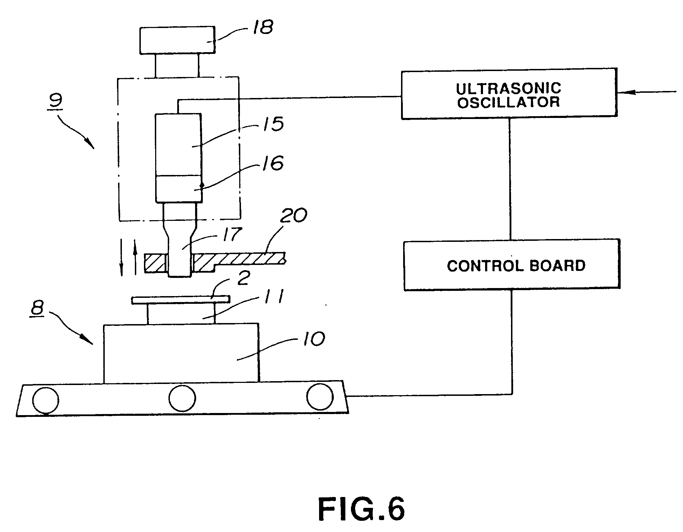

The mounting device comprises a supporting table 8 for setting the disc substrate 2 thereon and an ultrasonic wave generating unit 9 for impressing ultrasonic waves to the disc substrate 2, as shown in Fig.6.

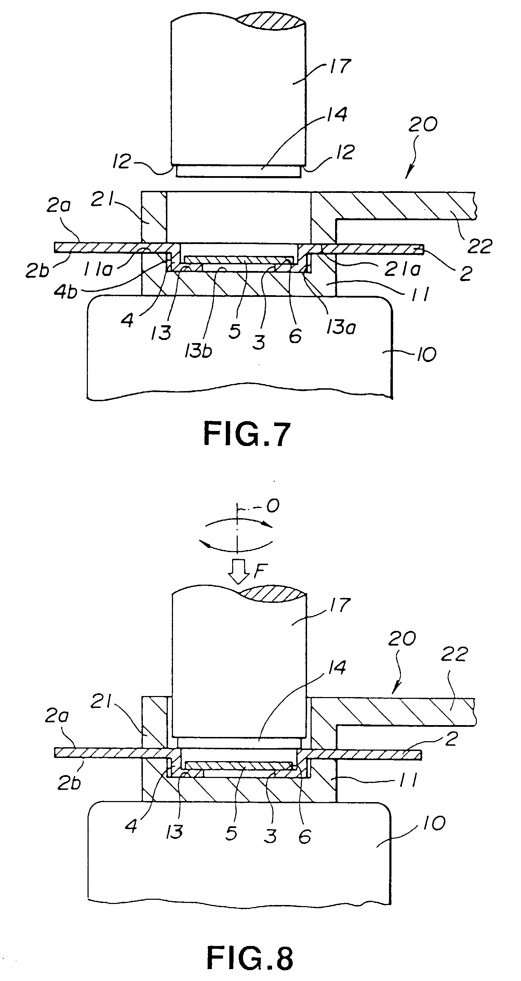

The supporting table 8 plays the role of positioning the disc substrate 2 set thereon in a plane parallel to the plane of the disc substrate 2 and in a plane perpendicular thereto. The supporting table 8 includes, on the upper surface of planar main body of the supporting table 10, a setting table 11 for setting the disc substrate 2 in position. The setting table 11 is designed as a disc having a central engaging recess 13 in which the protuberance 4 of the disc substrate 2 is engaged loosely, as shown in Fig.7. The engaging recess 13 is formed as a circular recess sized to accommodate the protuberance 4 of the disc substrate 2 therein. The engaging recess 13 is sized so that a small clearance is left between its inner peripheral wall 13a and the outer peripheral surface 4b of the protuberance 4 when the protuberance 4 is accommodated therein. Thus the disc substrate 2 is positioned with respect to the setting table 11 by the central protuberance 4 thereof engaged with the engaging recess 13. In other words, the disc substrate 2 is positioned in a direction parallel to the plane of the disc substrate 2. At this time, the protuberance 4 of the disc substrate 2 has its reference plane supported on the bottom surface 13b of the engaging recess 13. That is, the disc substrate 2 is positioned in a direction perpendicular to the plane of the disc substrate 2.

With the disc substrate 2 thus pqsitioned by the setting table 11, the disc substrate 2 has the reference plane 4a of the protuberance 4 thereof supported by the bottom plate 13b of the engaging recess 13, while having its major surface 2b as the data write/read surface supported by the circular upper end face 11a of the setting table 11. The above-described supporting table 8 is provided with an evacuating unit, not shown, for assuring evacuation using a vacuum pump for positively securing the disc substrate 2 set on the setting table 11.

The ultrasonic wave generating unit 9 comprises an ultrasonic oscillator 15 for transducing electrical energies generated by an ultrasonic oscillator into mechanical energies, a cone 16 for amplifying mechanical vibrations of the ultrasonic oscillator 15 and a columnar-shaped horn 17 for propagating the amplified mechanical vibrations to a workpiece, as shown in Fig.6.

The ultrasonic oscillator 15, cone 16 and the horn 17, arrayed vertically in this order, are arranged as an integral unit which may be moved vertically by a pneumatic cylinder 18 with respect to the disc substrate 2. A controlling board, not shown, is provided between the supporting table 8 and the ultrasonic oscillator. The controlling board plays the role of controlling the pressure and amplitude of the horn 17 with respect to the disc substrate 2 as well as depth of swaging.

In an embodiment shown in Figs.7 and 8, the foremost part of the horn 17 has a step 12 which is formed outwardly of the outer periphery of a welding part 14 employed for swaging the rim of the housing recess 6 of the disc substrate 2. The step plays the part of controlling the flow of the melted resin from the rim of the welding part 14. Meanwhile, the welding part 14 is formed as a columnar-shaped section of a size large enough to swage the rim part of the housing recess 6.

The ultrasonic wave generating unit 9 is provided with a disc retention device 20 for positively securing the disc substrate 2 set on the setting table 11. The disc retention unit 20 comprises a disc retainer 21 for directly holding the disc substrate 2 from above for immobilizing the disc substrate 2 and a supporting arm 22 extended integrally from and supporting the disc retainer 21.

The disc retainer 21 is formed as a ring of an outer diameter and size approximately equal to those of the setting table 11. The major surface 2a of the disc substrate 2 is supported in face-to-face contact with respect to an annular planar disc retaining surface 21a of the disc retainer 21. The disc retainer 21 is designed to hold the portion of the disc substrate 2 which is outside the recording layer for protecting the recording layer. On the other hand, the supporting arm 22 is integrally formed with the disc retainer 21. The disc retainer 21 may be moved vertically with respect to the disc substrate 2 by this supporting arm 22.

The manner in which the magnetic plate 5 is loosely mounted on the disc substrate 2 using the above-described mounting device is hereinafter explained.

First, the disc substrate 2 is set on the setting table 11, as shown in Fig.7. That is, the disc substrate 2 has its protuberance 4 housed and held within the engaging recess 13 formed in the setting table 11. This sets the loading position of the disc substrate 2 with respect to the setting table 11.

The evacuating system, not shown, provided within the setting table 11, is actuated for attracting the disc substrate 2 by vacuum suction for immobilizing the disc substrate on the setting table 11.

The magnetic plate 5 is then introduced into the housing recess 6 of the disc substrate 2.

As a result thereof, the magnetic plate is held in face-to- face contact on the bottom surface 13a of the engaging recess 13, as shown in Fig.7.

The disc retention unit 20 is then lowered into abutting contact with the disc substrate 2 set on the setting table 11. A predetermined pressure is applied to the disc retainer 21 of the disc retention unit 20 for positively securing the disc substrate 2 on the setting table 11.

The horn 17 is then lowered by the pneumatic cylinder 18 for causing the end welding part 14 thereof to bear against the opening rim of the housing recess 6 on the major surface 2a of the disc substrate 2 carrying the recording layer.

With a predetermined pressure F applied to the disc substrate 2 by the pneumatic cylinder 18, a torsional vibration is impressed on the disc substrate 2.

The term "torsional vibration" herein denotes an oscillation generated by rotating the horn in a plane by alternately switching between a clockwise rotation and a counterclockwise rotation about axis 0 of the horn 17 as a centre of rotation. The frequency of the torsional vibrations is set in consideration of controllability of the thickness of the protrusion 19 for preventing detachment of the magnetic plate 5 from the disc substrate 2 as later explained. Specifically, it is set so as to be within the range of 15 to 50 kHz. The frequency of 20 kHz is most preferred. The amplitude of the torsional vibration is preferably in a range of from 20 µm to 70 µm, depending on the material of the disc substrate 2. In the first embodiment, the amplitude is set to 70 µm.

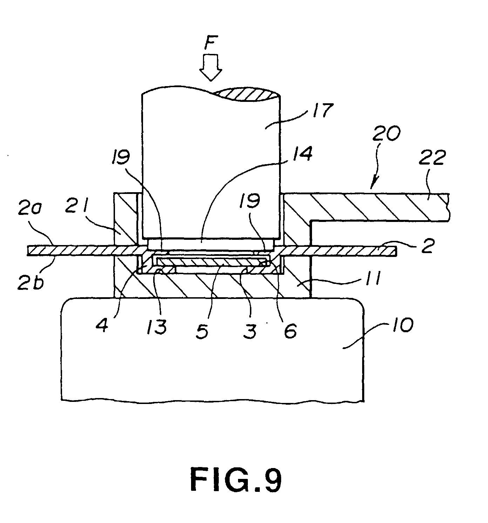

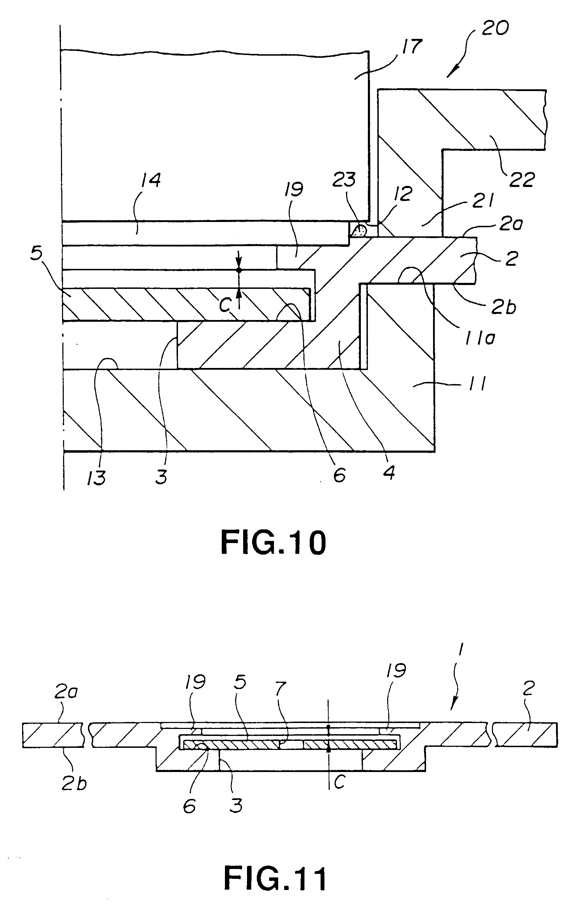

The opening rim of the housing recess 6, contacted by the horn 17, is then melted by the heat of friction, as shown in Fig.9. Part of melted resin 23 tends to flow out from the outer periphery of the welding part 14 of the horn 17, as shown in Fig.10. However, such flow of the melted resin 23 is inhibited by the step surface of the step 12. Besides, the melted resin 23 caused to flow from the major surface 2a of the disc substrate 2 is also regulated in height. If the melted resin 23 is caused to flow towards a higher position, the resin 23 is contacted with the inner wall surface of the main cartridge body when the disc 1 is housed within the cartridge main body to form a disc cartridge to affect the centreing etc. of the magneto-optical disc 1. With the present first embodiment, since the melted resin 23 caused to flow from the opening rim may be controlled in height, there is caused no problem when the disc is accommodated within the cartridge main body.

If the torsional vibration is applied in this state, as shown in Fig.9, the opening rim of the housing recess 6 is caused to flow towards the inner side of the housing recess 6, while forming a recess corresponding in size to the welding part 14 of the horn 17.

In this manner, a protrusion 19 extending towards the inner region of the housing recess 6 is formed at the opening rim of the housing recess 6. The protrusion 19 is formed to overlie an outer rim 5a of the magnetic plate 5 accommodated within the housing recess 6 for preventing the magnetic plate 5 from being detached from the disc substrate 2. Besides, the protrusion 19 has the thickness T of higher accuracy because the torsional vibration is approximate to a horizontally directed vibration in the in-plane direction of the disc substrate 2.

After the end of formation of the protrusion 19, the horn 17 and the disc retention unit 20 are lifted away from the disc substrate 2 and the operation of evacuation is discontinued for taking out the disc substrate 2.

As a result thereof, the magneto-optical disc 1 has the magnetic plate 5 loosely mounted on the disc substrate 2. With such magneto-optical disc 1, since the protrusion 19 formed by impressing ultrasonic vibration may have a highly accurate thickness of the protrusion 19, the magnetic plate 5 may be loosely fitted and held with respect to the disc substrate 2 with a preset amount of clearance C. In this manner, the disc substrate 2 may be prevented from being deformed due to the difference in thermal expansion coefficient between the disc substrate 2 of a synthetic material and the magnetic plate 5 of a magnetic metal material.

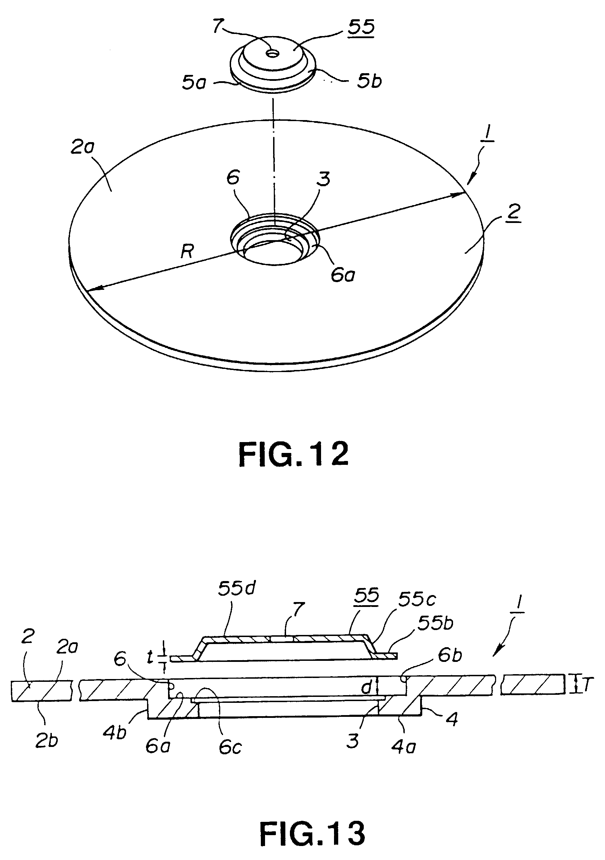

Referring to Fig.12, a second embodiment of the invention is explained in detail. In the second embodiment, the parts or components common to those of the preceding embodiment are indicated by the same reference numerals and the corresponding explanation is omitted for simplicity.

A magnetic plate 55, accommodated within the housing recess 6 of the disc substrate 2, is fabricated by punching a metallic metal material, such as stainless steel (SUS-430) having a thickness t on the order of 0.4 mm, in the shape of a disc, as shown in Figs.12 and 13.

The magnetic plate 55 is formed as a disc of a size large enough to be housed within the housing recess 6, as shown in Fig.12. The magnetic plate 5 has its outer rim bent to form a step, in order that, when the magnetic plate 5 is housed within the housing recess 6, a central major surface section 55d is flush with the major surface 2a of the disc substrate 2 and the outer rim part of the magnetic plate 5 is placed on an inner peripheral surface 6a of the housing recess 6. Besides, the magnetic plate 5 is sized so that, when the magnetic plate is housed within the housing recess 6, its outer peripheral surface 55a is not contacted with the inner peripheral wall 6b of the housing recess 6. That is, the magnetic plate 55 has its outer peripheral region formed by a bent section 55c which is bent to be sloped downwards towards the rim region and which is contiguous to a setting section 55b adapted for being set on the setting surface 6a. The magnetic plate 55 in its entirety is formed as a centrally recesses disc, as shown in Fig.12. The central region of the magnetic plate 55 has a small-sized circular through-hole 7 for ease of handling during manufacture.

The process steps and the manner of mounting the above- described magnetic plate 55 on the disc substrate 2 are hereinafter explained.

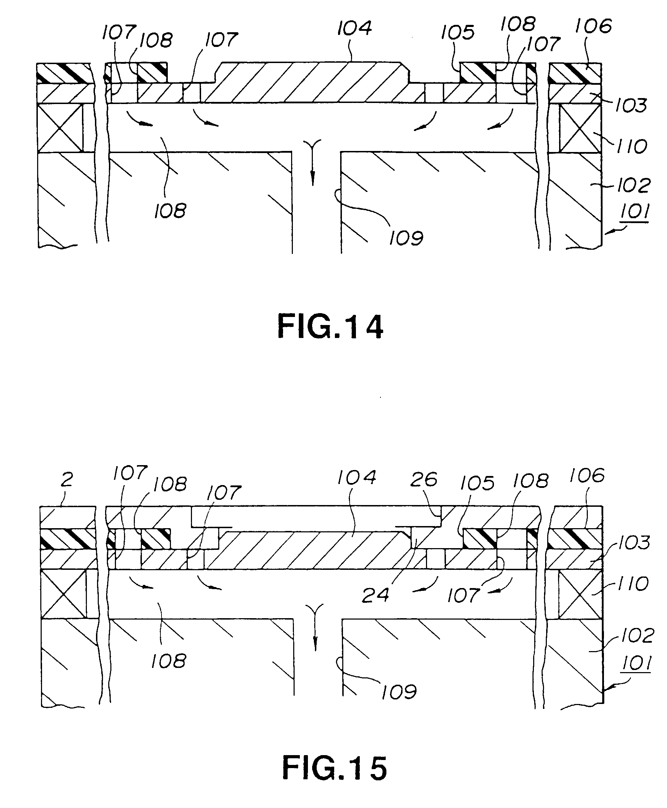

First, the disc substrate 2, fabricated as shown in Figs.14 and 15, is set on a suction type supporting table 101.

The suction type supporting table 101 is arranged for positioning the disc substrate 2 set thereon in a direction perpendicular to the direction parallel to the plane of the disc substrate 2 and holding the disc substrate 2 under suction. The supporting table 101 includes a setting table 103 on the upper surface of a main member of the supporting table 102 for setting the disc substrate 2 in position thereon, as shown in Fig.14. The setting table 103 has a central boss 104 engaged in the centre aperture 3 in the disc substrate 2 and an engaging valley 105 on an outer perimeter of the boss 104 engaged with the protrusion 24 of the disc substrate 22.

A protective sheet 106 formed of a pliable material, such as silicon rubber, is bonded to the disc substrate setting surface side of the setting table 103 adapted for receiving the major surface 2b of the disc substrate 2. The protective sheet 106 plays the role of preventing damages to the major surface 2b of the disc substrate 2 set on the setting table 103.

The suction type supporting table 101 is provided with an evacuating system for sucking the disc substrate 2 set on the setting able 103 using a vacuum pump. The evacuating system includes plural suction ports 107 and a suction air chamber 108 defined by providing plural spacers 110 between the setting table 103 and the main member of the supporting table 102. The evacuating system is arranged so that the suction air chamber 108 is evacuated by a vacuum pump, not shown, via an air passage 109 of the suction air chamber 108 formed in the main member of the supporting table 102, for supporting the disc substrate 2 under suction effects on the setting table 103.

The suction ports 107 are formed in the setting table 103 at the positions in register with the outer periphery and the mid part of the disc substrate 2 and within the region of the engaging valley 105 engaged by the protrusion 24. By providing the suction ports 107 at these positions in the setting table 103, the entire area of the disc substrate 2 is supported substantially uniformly in pressure contact with the setting table 103.

It is noted that the protective sheet 106 is also formed with through-holes 108 at the positions in register with the suction holes 107.

The disc substrate 2 is set on the above-described suction holding table 101 with the housing recess 6 for holding the magnetic plate 55 therein directed upwards, as shown in Fig.15. At this time, the disc substrate 2 is loaded with the boss 104 received in the centre aperture 3 in the housing recess 6 and with the protrusion 24 engaged in the engaging valley 105. In this manner, the disc substrate 2 is loaded in position on the suction holding table 101.

With the disc substrate 2 thus loaded on the suction holding table 101, the vacuum pump is actuated for sucking air within the suction air chamber 108 via air passage 109. This causes air confined between the disc substrate 2 and the suction holding table 101 to be sucked via suction ports 107 to cause the disc substrate 2 to be supported in intimate contact by the protective sheet 106 on the suction holding table 101.

Since the disc substrate 2 is loaded at this time on the suction holding table 101 with the boss 104 engaged in the centre aperture 104 and with the protrusion 24 fitted in the engaging valley 105, the disc substrate is loaded in position on the suction holding table 101.

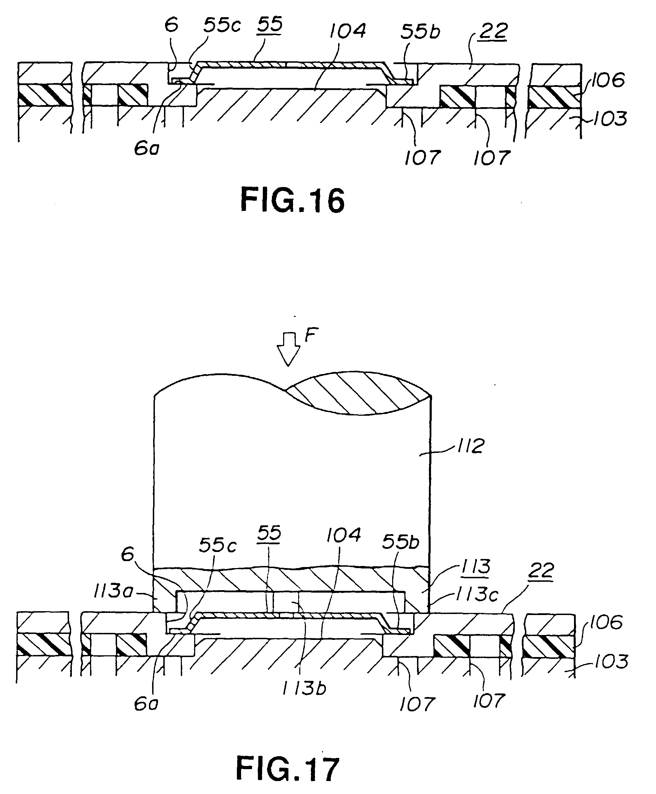

After the disc substrate 2 is loaded in this manner on the suction holding table 101, the magnetic plate 55 is placed within the housing recess 6. At this time, the magnetic plate 55 has the setting section 55b set on the setting surface 6a of the housing recess 6, as shown in Fig.16.

With the magnetic plate 6 housed in this manner in the housing recess 6, a vibration impressing device 112, a resonator of the ultrasonic wave impressing device 111, is caused to descend onto the disc substrate 2 set on the suction holding table 101 until a contacting end part 113 is contacted with the rim of the housing recess 6.

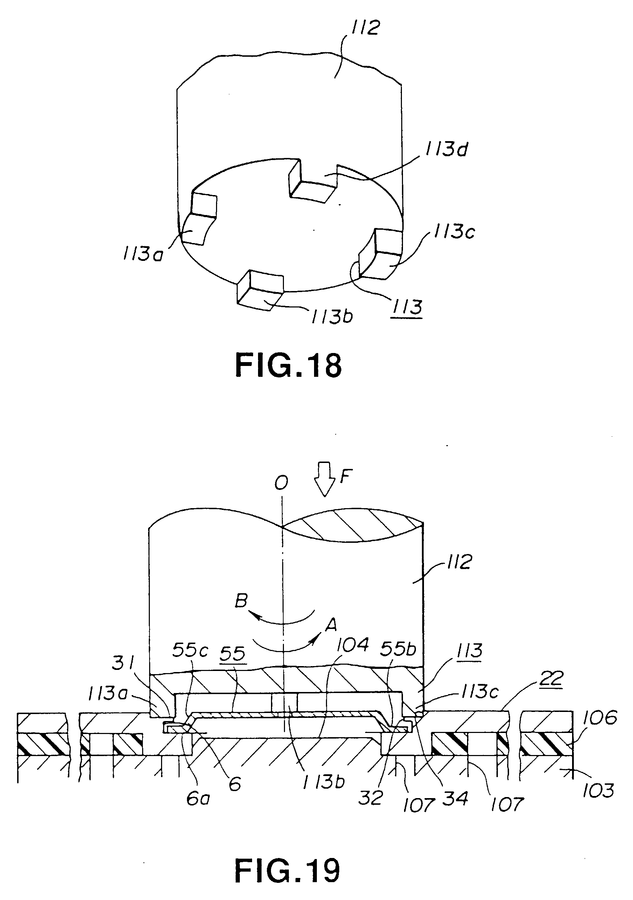

The contacting end part 113 of the impressing device 112 is made up of first to fourth contactors 113a to 113d adapted for being contacted with four equiangular points on the rim of the housing recess 6, as shown in Fig.17. That is, the contacting end part 113 includes the first to fourth contactors 113a to 113d formed at an angular interval of 90° at the end face of the impressing device 112, as shown in Fig.18.

With the first to fourth contactors 113a to 113d of the contacting end part 113 in contact with the rim of the housing recess 6 as shown in Fig.17, the ultrasonic wave impressing device 111 is run into operation for generating ultrasonic vibrations from the impressing device 112. The ultrasonic vibrations generated from the impressing device 112 are so-called torsional vibrations consisting of alternate reciprocating circumferential vibrations in the directions shown by arrows A and B in Fig.19, with the axis 0 of the impressing device 112 as the centre of alternate reciprocating rotations. Consequently, with the impressing device 112 in contact with the rim of the housing recess 6, ultrasonic vibrations along the circumferential direction are impressed on the disc substrate 2 in a direction parallel to its major surface.

With the ultrasonic vibrations impressed in this manner, the rim portions of the housing recess 6 contacted by the first to fourth contactors 113a to 113d are heated and softened. Since the impressing device 112 is pressed at a predetermined pressure, recessed parts 33 are formed on the rim of the housing recess 26 in register with the contactors 113a to 113d of the impressing device 112, at the same time that projecting parts 31 are formed for being projected towards the radially inner region of the housing recess 26. These projecting parts 31 are projected to overlie the setting sections 55b of the magnetic plate 55 housed within the housing recess 6, as shown in Fig.19. These projecting parts 31 play the role of supporting the setting sections 55b.

After the projecting parts 31 have been formed by allowing the first to fourth contactors 113a to 113d to be contacted with the rim of the housing recess 6 for a predetermined time, the vibration impressing device 112 is removed away from the disc substrate 2 to revert to its initial position.

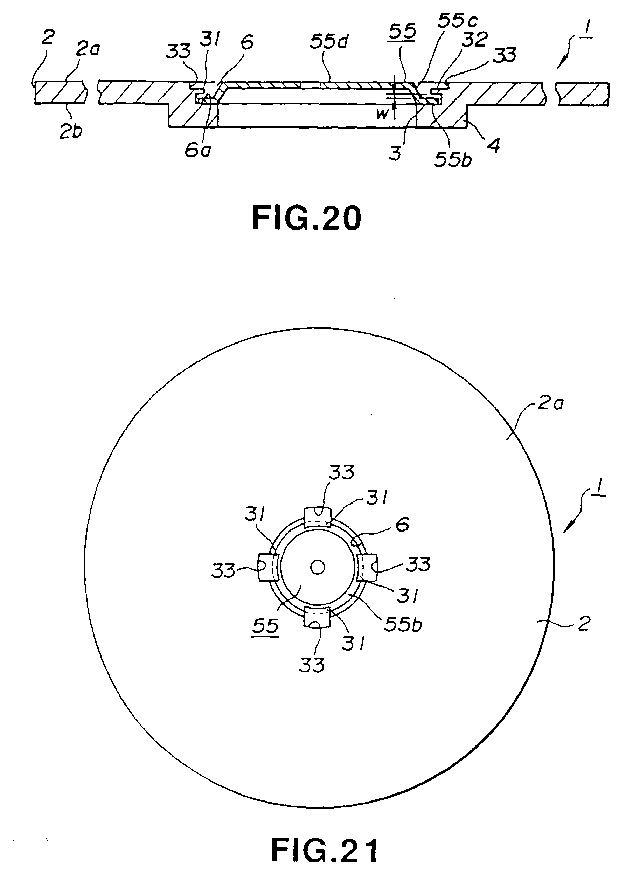

In the above-described second embodiment, the first to fourth contactors 113a to 113d are contacted simultaneously with four peripheral points of the housing recess 6 for simultaneously forming the four projecting parts 31 as shown in Figs.20 and 21 for holding the metal plate 25 accommodated within the housing recess 26. Alternatively, the projecting parts 31 may be formed on the rim of the housing recess 6 using a vibration impressing device 112 having a contacting end part 113 having first and second contactors at diametrically opposite positions.

If the projecting parts 31 are formed using the vibration impressing device 112 having a pair of contactors, only two projecting parts 31 are formed at two diametrically opposite positions on the rim of the housing recess 6 each time ultrasonic vibrations are applied to the disc substrate 2. If the four projecting parts 31 are to be formed as shown in Fig.21, the vibration impressing device 112 is adapted to be rotated about its axis so that a first pair of the projecting parts 31 are first formed by one impression of the ultrasonic vibrations and a second pair of the projecting parts 31 are subsequently formed by the second impression of the ultrasonic vibrations after rotating the vibration impressing device by 90°.

Meanwhile, the ultrasonic vibrations impressed on the disc substrate 2 are in a plane parallel to the major surface 22a of the disc substrate 22a, with the direction of the oscillations being along the circumference of the disc substrate. The rim of the housing recess 6 softened by contact with the impressing device constituting the contacting end part 113 is caused to flow along the circumference of the housing recess 6 which is the direction of reciprocating rotation of the ultrasonic vibrations. The softened rim of the housing recess 6 is caused to flow inwardly of the vacant inner region of the rim 6 to form projecting parts 31. These projecting parts 31 are caused to overlie the setting sections 55b of the magnetic plate 55 placed within the housing recess 6 for supporting the setting sections 55b for mounting the magnetic plate 55 on the disc substrate 2.

By pressing the impressing device 112 during application of the ultrasonic vibration by contacting the impressing device 112 with the disc substrate, the softened rim of the housing recess 6 may be positively allowed to flow towards the inner void region of the housing recess 6, as a result of which the projecting parts 31 are caused to flow towards the inner void region of the housing recess 6.

On the other hand, since the ultrasonic vibrations impressed on the disc substrate are horizontally directed vibrations within a plane parallel to the major surface 2a of the disc substrate 2, only a small fraction of these vibrations are transmitted along the thickness of the disc substrate 2. Consequently, the inner region of the body of the disc substrate 2 is heated only to a limited extent so that limitations are imposed on the deformation of the projecting parts 31 along the thickness of the disc substrate. The result is that the projecting parts 31 projecting into the inner void space of the housing recess 6 may be controlled in thickness. That is, by setting the depth d of the housing recess 6 so as to be deeper than the thickness of the magnetic plate 55, a gap w may be maintained between the projecting parts 31, 32 on one hand and the setting section 55b on the other hand to enable the magnetic plate 55 to be held loosely within the housing recess 6.

It is noted that the ultrasonic vibration applied to the disc substrate 2 which is formed of polycarbonate and to which the method according to the second embodiment of the present invention is applied is set within a range of from 15 to 50 kHz. That is, if the ultrasonic vibration has a frequency lower than 15 kHz, sufficient heat evolution cannot be achieved, whereas, if the ultrasonic vibration has a frequency higher than 50 kHz, heat evolution becomes excessive to render it difficult to control the amount of softening of the rim region which is to be softened by contact with the vibration impressing device 112. The ultrasonic vibration to be impressed preferably has a frequency on the order of 20 kHz.

## Claims

1. A method for mounting a magnetic plate (5) on a disc substrate (2) of a synthetic material comprising placing the magnetic plate (5) within a housing recess (6) of the disc substrate (2), abutting ultrasonic wave generating means (9) comprising a horn (17) on a rim of the housing recess (6) of the disc substrate, and ultrasonically forming a protrusion (19) directed towards a radially inner space of the housing recess (6) to mount the magnetic plate (5) on the disc substrate (2) by the protrusion (19);
characterised in that the ultrasonic wave generating means (9) generates torsional vibrations, that is to say an oscillation generated by rotating the horn (17) in a plane by alternately switching between a clockwise rotation and a counter-clockwise rotation about an axis (0) of the horn (17) as a centre of rotation, the frequency of the ultrasonic vibrations generated by the ultrasonic wave generating means (9) being 15 to 50 kHz.

2. A method according to claim 1, wherein the horn (17) of the ultrasonic wave generating means (9) is caused to abut on the disc substrate (2) with the disc substrate (2) being held by setting means and retention means for the disc substrate (2).

3. A method according to claim 1, wherein the horn (17) of the ultrasonic wave generating means (9) is caused to abut on the disc substrate (2) with the disc substrate (2) being held by holding means (21) holding the disc substrate (2) with the recess (6) thereof directed upwards.

4. A method according to claim 1, wherein the horn (17) has an end step (12).

5. A device for mounting a magnetic plate (5) to a disc substrate (2) formed of a synthetic material comprising
setting means (11) having a recess (13) engaged with a protuberance (4) of the disc substrate (5),
holding means (21) for holding the disc substrate (5) set on the setting means (11), the disc substrate (5) being set on the setting means (11) with the magnetic plate (5) being placed within a recess (6) of the disc substrate (2) formed on the opposite side to the protuberance (4), the holding means (21) having an opening, and
ultrasonic wave generating means (9) having a horn (17) introduced via said opening and abutted on a rim of the recess (6) with a predetermined pressure applied thereto;
wherein the ultrasonic wave generating means (9) comprises an ultrasonic oscillator reciprocatingly to rotate the horn (17) back and forth around a centreline (0) of the recess (6) of the disc substrate (2) as a centre of reciprocating rotation, the frequency of the ultrasonic vibrations generated by the ultrasonic wave generating means (9) being 15 to 50 kHz.

6. A device according to claim 5, wherein a step (12) is formed at a portion of the horn (17) of the ultrasonic wave generating means (9) abutted against the disc substrate (2).

7. A device according to claim 5, wherein the horn (17) is mounted for vertical movement towards and away from the disc substrate (2) held by the holding means (21).

8. A device according to claim 6, wherein the horn (17) has plural convexed contactors (113a to 113d) on the portion thereof abutted against the disc substrate (2).

9. A device according to claim 6, wherein said holding means has supporting means (101) having an engaging section (106) and plural through-holes (107) and suction means (109) for sucking the disc substrate (2) set on the supporting means (101) via the through-holes (107) in the supporting means (101).

## Patentansprüche

1. Verfahren zum Befestigen einer Magnetplatte (5) an einem Plattensubstrat (2) aus einem Kunststoffmaterial, mit den Schritten:
Anordnen der Magnetplatte (5) in einer Aufnahmeausnehmung (6) des Plattensubstrates (2), Anlegen einer Ultraschallwellen-Erzeugungseinrichtung (9), die einen Schalltrichter (17) aufweist, an einer Kante der Aufnahmeausnehmung (6) des Plattensubstrates, und Ausbilden eines Vorsprunges (19) durch Ultraschallwellen, der in Richtung eines radialen Innenraumes der Aufnahmeausnehmung (6) gerichtet ist, um die Magnetplatte (5) durch den Vorsprung (19) an dem Plattensubstrat (2) zu befestigen,
dadurch **gekennzeichnet,**
daß die Ultraschallwellen-Erzeugungseinrichtung (9) Drehvibrationen, d.h. eine Oszillation erzeugt, die durch Drehen des Schalltrichters (17) in einer Ebene durch abwechselndes Umschalten zwischen einer Drehung in Uhrzeigersinn und einer Drehung gegen den Uhrzeigersinn um eine Achse (0) des Schalltrichters (17) als Drehachse erzeugt wird, wobei die Frequenz der durch die Ultraschallwellen-Erzeugungseinrichtung (9) erzeugten Ultraschallvibrationen 15 bis 50 kHz beträgt.

2. Verfahren gemäß Anspruch 1, wobei der Schalltrichter (17) der Ultraschallwellen-Erzeugungseinrichtung (9) an dem Plattensubstrat (2) angelegt wird, wobei das Plattensubstrat (2) durch eine Setzeinrichtung und eine Sicherungseinrichtung für das Plattensubstrat (2) gehalten wird.

3. Verfahren gemäß Anspruch 1, wobei der Schalltrichter (17) der Ultraschallwellen-Erzeugungseinrichtung (9) an dem Plattensubstrat (2) angelegt wird, wobei das Plattensubstrat (2) durch eine Halteeinrichtung (21) gehalten wird, die das Plattensubstrat (2) mit ihrer Ausnehmung (6) nach oben gerichtet hält.

4. Verfahren gemäß Anspruch 1, wobei der Schalltrichter (17) eine endseitige Stufe (12) aufweist.

5. Vorrichtung zum Befestigen einer Magnetplatte (5) an einem Plattensubstrat (2), das aus Kunststoffmaterial besteht, mit
einer Setzeinrichtung (11) mit einer Ausnehmung (13), die sich in Eingriff mit einer Ausstülpung (4) des Plattensubstrates (2) befindet,
einer Halteeinrichtung (21) zum Halten des Plattensubstrates (2), das auf die Setzeinrichtung (11) gelegt ist, wobei das Plattensubstrat (2) so auf die Setzeinrichtung (11) gelegt wird, daß die Magnetplatte (5) in einer Ausnehmung (6) des Plattensubstrates (2) angeordnet wird, die auf der der Ausstülpung (4) gegenüberliegenden Seite ausgebildet ist, wobei die Halteeinrichtung (21) eine Öffnung aufweist, und
einer Ultraschallwellen-Erzeugungseinrichtung (9) mit einem Schalltrichter (17), der durch die Öffnung eingeführt und an eine Kante der Ausnehmung (6) angelegt wird, wobei ein vorbestimmter Druck auf ihn ausgeübt wird,
wobei die Ultraschallwellen-Erzeugungseinrichtung (9) einen Ultraschalloszillator aufweist, um den Schalltrichter (17) hin- und herbewegend vor und zurück um eine Mittellinie (0) der Ausnehmung (6) Plattensubstrates (2) als Achse der Hin- und Herdrehung zu rotieren, wobei die Frequenz der durch die Ultraschallwellen-Erzeugungseinrichtung (9) erzeugten Ultraschallvibrationen 15 bis 50 kHz beträgt.

6. Vorrichtung gemäß Anspruch 5, wobei eine Stufe (12) an einem an dem Plattensubstrat (2) anliegenden Abschnitt des Schalltrichters (17) der Ultraschallwellen-Erzeugungseinrichtung (9) ausgebildet ist.

7. Vorrichtung gemäß Anspruch 5, wobei der Schalltrichter (17) für eine vertikale Bewegung hin zu und weg von dem Plattensubstrat (2) angebracht ist, das von der Halteeinrichtung (21) gehalten wird.

8. Vorrichtung gemäß Anspruch 6, wobei der Schalltrichter (17) mehrere konvexe Kontaktelemente (113a bis 113d) an einem Abschnitt aufweist, der an dem Plattensubstrat (2) anliegt.

9. Vorrichtung gemäß Anspruch 6, wobei die Halteeinrichtung eine Trageeinrichtung (101) mit einem Eingriffsabschnitt (106) und mehreren durchgehenden Löchern (107) und eine Saugeinrichtung (109) zum Saugen des auf die Trageeinrichtung (101) gelegten Plattensubstrates (2) durch die durchgehenden Löcher (107) in der Trageeinrichtung (101) aufweist.

## Revendications

1. Procédé de montage d'une plaque magnétique (5) sur un substrat (2) de disque en matière synthétique comprenant le placement de la plaque magnétique (5) dans un évidement (6) de logement du substrat (2) de disque, la mise en butée d'un moyen (9) générateur d'ondes ultrasonores, comprenant un vibreur (17), sur un bord de l'évidement (6) de logement du substrat de disque, et la formation aux ultrasons d'une protubérance (19) dirigée vers l'intérieur d'un espace interne radialement de l'évidement (6) de logement pour monter, par la protubérance (19), la plaque magnétique (5) sur le substrat (2) de disque ;
caractérisé en ce que le moyen (9) générateur d'ondes ultrasonores produit des vibrations de torsion, c'est-à-dire une oscillation engendrée par rotation du vibreur (17) dans un plan, en changeant alternativement entre une rotation dans le sens des aiguilles d'une montre et une rotation dans le sens contraire des aiguilles d'une montre autour d'un axe (O) du vibreur (17) comme centre de rotation, la fréquence des vibrations ultrasonores engendrées par le moyen (9) générateur d'ondes ultrasonores étant de 15 à 50 kHz.

2. Procédé selon la revendication 1, dans lequel le vibreur (17) du moyen (9) générateur d'ondes ultrasonores vient buter sur le substrat (2) de disque, le substrat (2) de disque étant maintenu par un moyen de placement et un moyen de retenue du substrat (2) de disque.

3. Procédé selon la revendication 1, dans lequel le vibreur (17) du moyen (9) générateur d'ondes ultrasonores vient buter sur le substrat (2) de disque, le substrat (2) de disque étant maintenu par un moyen (21) de maintien maintenant le substrat (2) de disque avec son évidement (6) dirigé vers le haut.

4. Procédé selon la revendication 1, dans lequel le vibreur (17) comporte une dénivellation d'extrémité (12).

5. Dispositif destiné au montage d'une plaque magnétique (5) sur un substrat (2) de disque fait d'une matière synthétique, comprenant :
un moyen (11) de placement comportant un évidement (13) dans lequel s'engage une protubérance (4) du substrat (5) de disque ;
un moyen (21) de maintien destiné à maintenir le substrat (5) de disque placé sur le moyen (11) de placement, le substrat (5) de disque étant placé sur le moyen (11) de placement avec la plaque magnétique (5) qui se trouve à l'intérieur d'un évidement (6) du substrat (2) de disque formé du côté opposé à la protubérance (4), le moyen (21) de maintien comportant une ouverture ; et
un moyen (9) générateur d'ondes ultrasonores comportant un vibreur (17) introduit par ladite ouverture et en butée sur un bord de l'évidement (6), une pression prédéterminée lui étant appliquée ;
dans lequel le moyen (9) générateur d'ondes ultrasonores comprend un oscillateur à ultrasons animé d'un mouvement de va et vient pour faire tourner le vibreur (17) en va et vient, en sens direct et inverse, autour d'un axe (O) de l'évidement (6) du substrat (2) de disque comme centre de la rotation, la fréquence des vibrations ultrasonores engendrées par le moyen (9) générateur d'ondes ultrasonores étant de 15 à 50 kHz.

6. Dispositif selon la revendication 5, dans lequel une dénivellation (12) est formée au droit d'une partie du vibreur (17) du moyen (9) générateur d'ondes ultrasonores en butée contre le substrat (2) de disque.

7. Dispositif selon la revendication 5, dans lequel le vibreur (17) est monté pour un déplacement vertical se rapprochant et s'écartant du substrat (2) de disque maintenu par le moyen (21) de maintien.

8. Dispositif selon la revendication 6, dans lequel le vibreur (17) comporte plusieurs contacteurs convexes (113a à 113d) sur sa partie en butée contre le substrat (2) de disque.

9. Dispositif selon la revendication 6, dans lequel ledit moyen de maintien comporte un moyen (101) d'appui comportant une section (106) de coopération et plusieurs trous traversants (107) et un moyen (109) de succion pour attirer le substrat (2) de disque placé sur le moyen (101) d'appui en passant par les trous traversants (107) du moyen (101) d'appui.
